Europäisches Patentamt

European Patent Office

Office européen des brevets

(11) Publication number: **0 144 842
B1**

# EUROPEAN PATENT SPECIFICATION

(45) Date of publication of patent specification: **27.07.88**

(21) Application number: **84113910.8**

(22) Date of filing: **16.11.84**

(51) Int. Cl.⁴: $F\ 01\ D\ 5/08$

(54) Cascaded air supply for gas turbine cooling.

(30) Priority: **05.12.83 US 557792**

(43) Date of publication of application:
**19.06.85 Bulletin 85/25**

(45) Publication of the grant of the patent:
**27.07.88 Bulletin 88/30**

(84) Designated Contracting States:
**BE DE FR IT NL SE**

(56) References cited:
**DE-A-1 928 184
DE-A-2 043 480
FR-A-2 086 275
GB-A-1 183 835
GB-A-2 032 531
GB-A-2 057 573
US-A-3 318 573
US-A-4 062 638**

(73) Proprietor: **WESTINGHOUSE ELECTRIC
CORPORATION
Westinghouse Building Gateway Center
Pittsburgh Pennsylvania 15222 (US)**

(72) Inventor: **Smed, Jan Peer
600 Spring Line Drive
West Chester Pennsylvania 19380 (US)**
Inventor: **Holden, Paul Clarence
137 Hunt Club Lane
Newton Square Pennsylvania 19073 (US)**

(74) Representative: **Fleuchaus, Leo, Dipl.-Ing. et al
Fleuchaus & Wehser Melchiorstrasse 42
D-8000 München 71 (DE)**

Courier Press, Leamington Spa, England.

## Description

This invention relates to a gas turbine, and in particular to gas turbine cooling.

In gas turbines cooling air is supplied to the rotor disc areas to prevent rotor disc material overheating. For example, with a three-stage turbine and a 19 stage compressor, air is delivered to the third stage stator nozzle vanes from, say, the seventh stage of the compressor, the second stage nozzle vanes receive air from, say, the thirteenth stage of the compressor, and a third source of air, which is fully compressed and taken from the shell into which the compressor discharges, is cooled to a significantly lower temperature, and fed to a location on the torque tube bounded by dynamic seals from which it enters the rotor to cool the blades and inner portions of the discs or leaks through the dynamic seals. The turbine side dynamic seal leakage air serves in part to cool the first stage disc cavity, but its most important function is to prevent the flow of hot gases from the blade path upstream of the first stage blades from passing through a dynamic seal between the upstream side of the first stage blade assemblies and an opposing stationary part. In other words, in order to maintain a cool disc environment, it is desirable, if not necessary, to pass some air from the disc cavity areas into the blade path, rather than in an opposite direction. All three separate sources of air referred to before perform this same function, as well as a cooling function in the disc cavity areas. Whereas the amount of air supplied to the second and third stages of the turbine is closely matched to perform the desired cooling and leakage functions, that which leaks through the turbine side torque tube seals exceeds the amount required to perform the first stage disc cooling and leakage function.

GB—A—2057 573 describes a turbine rotor assembly which provides means for passing cooling air from an upstream disc cavity past blade platforms through holes in the downstream flange of the turbine disc to a downstream disc cavity. A seal at the front of the blade platforms of the turbine stage is provided to minimize leakage of cooling air into the hot gas stream which flows over the turbine blades.

FR—A—2086 275 describes a turbine cooling system in which cooling air is supplied past stator vanes and through holes in the vane platform to the disc cavity below. From there the cooling air leaks through a labyrinth seal to an upstream disc cavity.

Since excessive use for cooling flow reduces gas turbine efficiency it is desirable to reduce overall cooling air flow to a minimum. An object of this invention to provide a construction in a turbine of the type described to accomplish this.

According to the present invention, a gas turbine having a staged compressor, and a staged turbine including at least first and second stage rotor discs carrying individual rotor blade assemblies, each blade assembly having a blade joined to a blade platform having a radial extension portion recessed with respect to said platform and a root portion formed to slidably fit into a notch in the periphery of the rotor disc, an axially extending passage for cooling air being formed thereby between each of the adjacent blade assemblies by the blade platform, the recessed extension portion and the rotor disc periphery, and a turbine cooling system in which cooling air is supplied through stator vanes of at least said second stage of the turbine, to the second disc cavity at the downstream side of said first stage disc and cooling air is also supplied through a labyrinth seal to the first disc cavity at the upstream side of said first stage disc, characterized by dynamic seal means formed at the sides of each blade platform abutting the sides of the adjacent blade platforms and upstream dynamic seal means formed between the upstream sides of the blade platforms of said first stage disc and a stator part, and plate means at the downstream end of each said axial extending passage, said plate means including opening means therein sized relative to the effective opening area of the upstream dynamic seal to pass a substantial part of air from said first stage cavity to the next downstream stage cavity to provide cooling in said next downstream stage cavity.

Conventionally, the torque tube leakage air flow is divided after cooling the first disc cavity so that only a quantity approximating that to satisfy the requirement of leakage into the blade path is leaked therethrough, while the majority of the air is metered from an axial extending passage between the first stage blade assemblies into the second stage disc cavity where it performs a cooling function and additionally provides part or all of the air to satisfy the leakage function into the blade path. In the gas turbines provided by the assignee of this application this blade path leakage requirement is minimized by providing seal means between adjacent blade assemblies of the turbine first stage at the radially outer boundaries of the axially extending passages between the blades, and by providing plate means at the downstream ends of the axial extending passages. The "cascading" of the torque tube leakage air is obtained by providing opening means in this plate means sized, relative to the effective opening area of the upstream dynamic seal between the blade assembly and the opposing stationary parts and other minor leakage paths to pass the majority of air from the first stage cavity to the next downstream stage cavity.

The invention will now be described, by way of example, with reference to the accompanying drawings in which:

Figure 1 is a longitudinal sectional view, principally of the bladed portion, of an axial flow turbine having a cooling arrangement;

Figure 2 is a fragmentary side view of a rotor blade assembly with a seal plate partly broken and sectioned, in installed relation on the blade assembly;

Figure 3 is an isometric view of the fragmentary portion of the blade assembly, and with a fragmentary portion of the seal plate for the assembly shown in installed relation; and

Figure 4 is a sectional view corresponding to one taken along the line IV—IV, but also including a pin in the groove, and a portion of the abutting adjacent blade assembly.

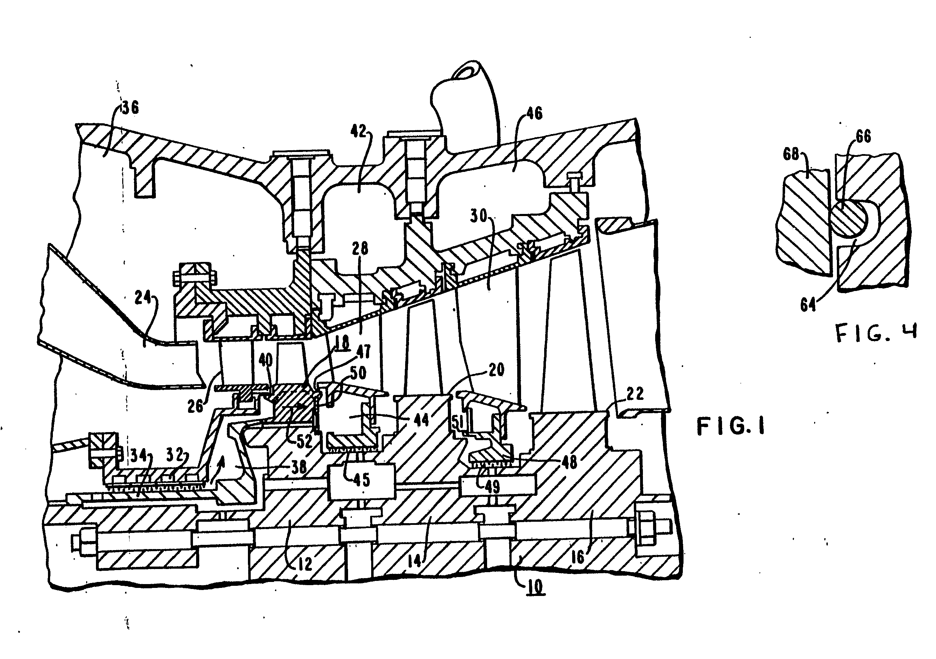

Figure 1 shows a turbine portion of a gas turbine, a rotor 10 includes first, second, and third stage rotor discs 12, 14, 16, respectively, which carry on their circumferences the rotor blade assemblies 18, 20 and 22, respectively, each of which has the bladed portion of the assembly in the hot gas path 24, which is sometimes called the blade path. Each stage of the turbine has its fixed stator vanes identified as 26, 28 and 30.

In one type of turbine manufactured by the present applicants at least one labyrinth seal 32 is provided between the stationary turbine structure and the rotating torque tube 34. In that type of turbine, air which has been fully compressed by the compressor (not shown) is taken from the combustor shell 36, passed through an external heat exchanger to cool the air and then is directed to the vicinity of the torque tube as indicated by the solid line arrow at the upstream end of the labyrinth seal 32. From there some air enters the torque tube through holes (not shown) and other air leaks through labyrinth seal 32. While the air in the combustor shell may be at a temperature of 750°F (399°C) depending upon ambient temperatures, the air passing to the labyrinth seal may be in the neighborhood of 400°F (204°C) after passing through the heat exchanger. Because of manufacturing tolerances and thermal expansion and contraction requirements, the labyrinth seal 32 is imperfect and air is expected to leak therethrough and into the disc cavity 38 of the first turbine stage as indicated by the arrow at the downstream end of the seal. This air performs a cooling function in the first disc cavity 38 and is then passed to the upstream side of the blade assembly 18 where, in the prior art turbine, all of its exits through seal 40 at the upstream side of the blade assembly 18 or other minor leakage paths not shown. This leakage of the air through seal 40 prevents fluid in the hot gas or blade path 24 from passing into the rotor disc areas.

Another source of cooling air for the turbine is air which is bled from some upstream stage, such as the thirteenth stage of a nineteen stage compressor in the particular embodiment being used as an example, and this air is then fed to the space 42 from which part of it leaks into the hot gas path to prevent reverse flow and part of it flows down into stator vanes 28, from which part of it performs a cooling function of the vane and leaks into the hot gas path and another part passes down into the second disc cavity space 44 to provide cooling and leakage for the second interstage seals 45 and into the gas stream at seal 47. The air which is bled from the thirteenth stage and passed to the space 42 may have a temperature in the order of 600°F (316°C) in accordance with ambient temperatures. In any event, with that particular turbine, the range of air temperatures for the second stage cooling is significantly greater than the temperature range of the air which passes through the labyrinth seal 32 and to the first stage.

Finally, additional air from another source, such as the seventh stage of the compressor is bled therefrom and passed to the space 46 for passage through the vane 30 to the third interstage seal cavity 48 for purposes of leakage. The temperature of this air may be in the range of 350°F (177°C), again depending upon ambient. Substantially all of this air is used for leakage from the third interstage disc cavity through seals 49 and 51, since the temperatures in the third stage of the turbine are significantly less than at the first stage, and substantially no cooling of the stator vanes 30 is required to be carried out.

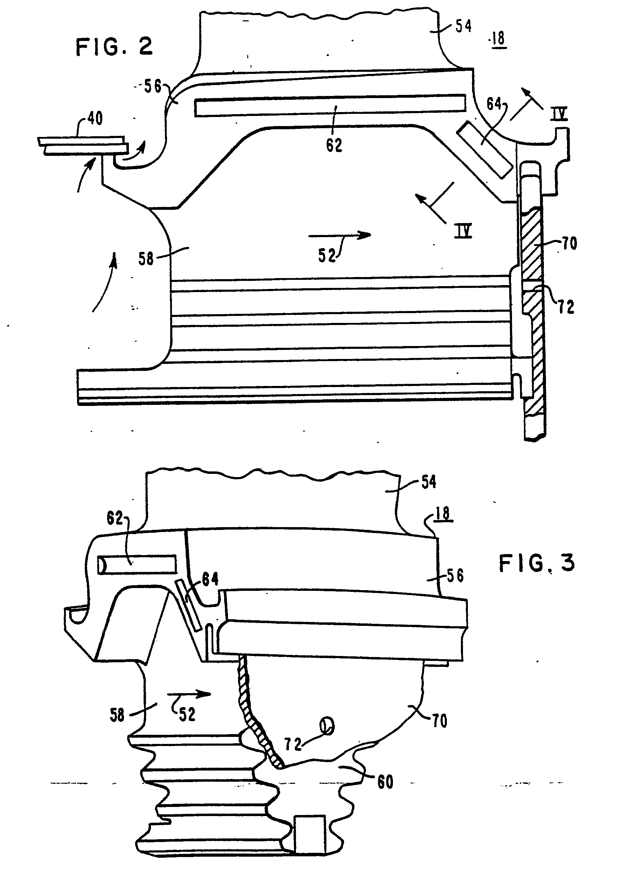

In the prior art embodiment, a side plate 50 on the downstream side of each blade assembly is provided to seal as well as is reasonably possible against the leakage of the air from the first disc cavity 38 to the second disc cavity 44 so that, in the prior art embodiment, the air indicated as passing in the direction of the solid arrow 52 is absent. However, in the present invention, the majority of this air from the first disc cavity will flow as indicated by the directional arrow 52 to the second disc cavity, as will be explained in the description of the structure as shown in Figures 2—4.

As seen in Figures 2 and 3, each first stage blade assembly 18 includes the blade 54 which extends into the blade path, the blade platform 56, the blade extension portion 58 and the root portion 60 which is of conventional serrated form and which is received in a complementary notched configuration at the periphery of the rotor disc.

The blade assemblies are installed in the disc in the conventional fashion with each end of the platform being in relatively close abutting relation to a facing end of a platform of an adjacent blade assembly. However, again because of required tolerances and expansion and contraction, there is some slight gap, such as 20 mils (0,508 mm), for example, between the closely adjacent platforms. To substantially seal this gap, grooves 62 and 64 are provided in one end of the platform of each blade assembly, and pins (for example 66 in Figure 4) are loosely disposed in the groove so that during operation, the pin will be moved by centrifugal force as indicated in Figure 4 to substantially seal against the adjacent blade assembly 68 providing dynamic seal means. Since the blade extension portions 58 are recessed relative to the ends of the platform, and since the radially outer end of the rotor disc steeples (not shown) only extend radially outwardly sufficiently far to accommodate the serrations of the root 60, an axially extending passage is formed between the complementary recesses of the adjacent blade assemblies. It is through this generally axially extending space between adjacent blade assemblies, sealed at its radially outer boundaries by the centrifugally loaded pins, that cooling air can flow as indicated by the arrow 52.

However, the blade assemblies do each have a downstream side plate, identified by the different numeral 70 in Figures 2 and 3, since this side plate differs from that side plate 50 in Figure 1 because of one important difference. That important difference is the provision of a metering hole 72 in an area of the side plate which is in communication with the axially extending passage. That hole is sized, relative to the effective opening area of the upstream dynamic seal formed at 40 and other minor leakage paths not discussed so that the majority of the air furnished to the first disc cavity will pass through the axially extending passage and out the opening 72 to the second stage disc cavity. As an example of numerical values, a typical turbine may pump 3 to 4 pounds of air per second through the labyrinth seal while about 1 pound of air per second through the dynamic seal 40 will guarantee an outflow into the blade path, as well as having provided some cooling of the first disc cavity. Thus in the preferred embodiment, the hole 72 is sized to pass 2 to 3 pounds of air per second through the axial passage 52 and into the second stage disc cavity. As a result, the air which is bled from the compressor to feed the second stage of the turbine can be significantly reduced, such as in the order of 25% or more so that its principal function will be that of providing leakage air at the radially outer portion of the second stage, and cooling of the stator vanes 28. Most of the requirement for leakage air and cooling for the second disc cavity can be performed, in an arrangement according to the invention, by the air which passes through the axial passage 52. Thus, the torque tube leakage air is efficiently utilized to give an overall reduction in total cooling air consumption thereby improving engine efficiency.

While the invention has been described in connection with one particular type of turbine using different temperature cooling air sources because this is one of the best applications of the invention, the cascading principle can also be usefully applied to turbines having a common source for cooling air.

## Claims

1. A gas turbine having a staged compressor, and a staged turbine including at least first and second stage rotor discs carrying individual rotor blade assemblies, each blade assembly (18) having a blade (54) joined to a blade platform (56) having a radial extension portion (58) recessed with respect to said platform and a root portion (60) formed to slidably fit into a notch in the periphery of the rotor disc, an axially extending passage for cooling air (52) being formed thereby between each of the adjacent blade assemblies by the blade platform, the recessed extension portion and the rotor disc periphery, and a turbine cooling system in which cooling air is supplied through stator vanes of at least said second stage of the turbine to the second disc cavity at the downstream side of said first stage disc and cooling air is also supplied through a labyrinth seal to the first disc cavity at the upstream side of said first stage disc, characterized by dynamic seal means (62, 64, 66) formed at the sides of each blade platform (56) abutting, the sides of the adjacent blade platforms and upstream dynamic seal means (40) formed between the upstream sides of the blade platforms of said first stage disc and a stator part, and plate means (70) at the downstream end of each said axial extending passage, said plate means including opening means (72) therein sized relative to the effective opening area of the upstream dynamic seal (40) to pass a substantial part of air from said first stage cavity (38) to the next downstream stage cavity (44) to provide cooling in said next downstream stage cavity.

2. A turbine as claimed in claim 1, characterized by a substantial part of air passing to said next downstream stage cavity comprising on the order of 2 to 3 times the amount of air passed through said effective opening area of the upstream dynamic seal.

3. A turbine as claimed in claim 1 or 2, characterized by said dynamic seal means comprising at least one centrifugally loaded seal pin in at least one groove formed in the downstream side of each platform of each blade assembly.

4. A turbine as claimed in any one of the claims 1 to 3, characterized by said cooling air supplied through said torque tube seal being of a lower temperature than said cooling air supplied through said stator vane nozzles.

## Patentansprüche

1. Eine Gasturbine mit einem mehrstufigen Kompressor und einer mehrstufigen Turbine, die mindestens Rotorscheiben erster und zweiter Stufe aufweist, die individuelle Rotorschaufelanordnungen tragen, wobei jede Schaufelanordnung (18) eine Schaufel (54) enthält, die mit einem Schaufelfuß (56) verbunden ist, der einen in bezug auf den Fuß und einen Wurzelteil (60) zurückgesetzten radialen Erweiterungsteil (58) aufweist, der so geformt ist, daß er gleitend in eine Einkerbung am Umfang der Rotorscheibe eingreift und mit einem sich in axialer Richtung erstreckenden Durchgang für Kühlluft (52), der dabei zwischen jeder der benachbarten Schaufelanordnungen durch den Schaufelfuß, den zurückgesetzten Erweiterungsteil und den Umfang der Rotorscheibe gebildet wird, und mit einem Turbinenkühlsystem, bei dem Kühlluft durch Statorleitschaufeln von mindestens der zweiten Stufe der Turbine, an die zweite Scheibenkammer auf der stromabwärts gelegenen Seite der Scheibe erster Stufe geführt wird und Kühlluft weiter durch eine Labyrinthdichtung an die erste Scheibenkammer auf der stromaufwärts gelegenen Seite der Scheibe erster Stufe geführt wird, gekennzeichnet durch dynamische Dichtvorrichtungen (62, 64, 66), die auf den Seiten jedes Schaufelfußes (56) gebildet werden, der an die Seiten der benachbarten Schaufelfüße anstößt, und stromaufwärts gelegene dynamische Dichtvorrichtungen (40), die zwischen den stromaufwärts gelegenen Seiten der Schaufelfüße in der Scheibe erster Stufe und einem Statorteil gebildet werden, und Platten (70) am stromabwärts gelegenen Ende jedes sich in axialer Richtung erstreckenden Durchgangs, wobei in den Platten Öffnungen (72) enthalten sind, deren Abmessungen relativ zu der effektiven Öffnung der stromaufwärts gelegenen dynamischen Dichtung (40) so gewählt sind, daß ein wesentlicher Teil der Luft von der Kammer (38) erster Stufe an die Kammer (44) der nächsten stromabwärts gelegenen Stufe abgegeben wird, um in der Kammer der nächsten stromabwärts gelegenen Stufe Kühlung zur Verfügung zu stellen.

2. Eine Turbine nach Anspruch 1, dadurch gekennzeichnet, daß ein wesentlicher Teil der Luft zur Kammer der nächsten stromabwärts gelegenen Stufe hindurchtritt und größenordnungsmäßig 2 bis 3 Mal die Luftmenge umfaßt, die durch die effektive Öffnung der stromaufwärts gelegenen dynamischen Dichtung geführt wird.

3. Eine Turbine nach Anspruch 1 oder 2, dadurch gekennzeichnet, daß die dynamischen Dichtvorrichtungen mindestens einen durch Zentrifugalkraft balasteten Dichtstift in mindestens einer Nut aufweisen, die auf der stromabwärts gelegenen Seite jedes Fußes jeder Schaufelanordnung ausbildet ist.

4. Eine Turbine nach irgendeinem der Ansprüche 1 bis 3, dadurch gekennzeichnet, daß die durch die Dichtung der Drehmomentwelle zugeführte Kühlluft eine geringere Temperatur aufweist als die Kühlluft, die durch die Statorleitschaufeln zugeführt wird.

**Revendications**

1. Turbine à gaz possédant un compresseur à étages, et une turbine à étages comprenant au moins un premier et un second étages de couronnes de rotor supportant des agencements d'aube individuels, chaque agencement d'aube (18) possédant une aube (54) associée à une base d'aube (56) munie d'une partie formant prolongement radial (58) en retrait par rapport à ladite base et d'une partie formant racine (60) constituée de façon à s'ajuster par coulissement à l'intérieur d'un évidement de la périphérie de la couronne de rotor, et un couloir (52) pour l'air de refroidissement s'étendant axialement qui est constitué de ce fait entre chacun des agencements d'aube adjacents par la base de l'aube, la partie formant prolongement en retrait et la périphérie de la couronne de rotor, et un système de refroidissement de turbine dans lequel l'air de refroidissement est fourni par l'intermédiaire des aubes de stator d'au moins ledit second étage de la turbine jusqu'à la cavité de la seconde couronne du côté aval de la couronne dudit premier étage et l'air de refroidissement est aussi fourni par l'intermédiaire d'un joint d'étanchéité à labyrinthe jusqu'à la cavité de la première couronne du côté amont de la couronne dudit premier étage, caractérisée par des moyens formant joints d'étanchéité dynamique (62, 64, 66) constitués sur les côtés de chaque base (56) d'aube s'appuyant contre les côtés des bases d'aubes adjacentes et des moyens formant joints d'étanchéité dynamique amont (40) constitués entre les côtés amont des bases d'aubes de la couronne dudit premier étage et une partie du stator, et des moyens formant plaques (70) à l'extrémité aval de chacun desdits couloirs d'étandant axialement, lesdits moyens formant plaques comprenant des ouvertures (72) situées à l'intérieur, dimensionnées par rapport à la surface d'ouverture équivalente du joint d'étanchéité dynamique amont (40) de manière à laisser passer une partie appréciable d'air à partir de la cavité (38) dudit premier étage jusqu'à la cavité (44) de l'étage aval suivant de façon à assurer le refroidissement de la cavité-dudit étage aval suivant.

2. Turbine selon la revendication 1, caractérisée par le fait que la partie appréciable d'air passant vers la cavité dudit étage aval suivant comporte un ordre de grandeur de 2 à 3 fois la quantité d'air qui passe à travers ladite surface utile d'ouverture du joint d'étanchéité dynamique amont.

3. Turbine selon la revendication 1 ou la revendication 2, caractérisée par le fait que lesdits moyens formant joints d'étanchéité dynamique comprennent au moins un jonc cylindrique d'étanchéité chargé par la force centrifuge, disposé dans au moins une rainure ménagée du côté aval de chaque base de chaque agencement d'aube.

4. Turbine selon l'une quelconque des revendications 1 à 3, caractérisée par le fait que ledit air de refroidissement introduit par l'intermédiaire dudit joint d'étanchéité du tube de couple est à une température plus basse que ledit air de refroidissement introduit par l'intermédiaire desdits injecteurs des aubes de stator.

FIG.1

FIG. 4

0 144 842

FIG. 2

FIG. 3